# EUROPEAN PATENT APPLICATION

(11) **EP 4 439 962 A1**
(43) Date of publication of application: **02.10.2024**
(21) Application number: 23165682.8
(22) Date of filing: 30.03.2023
(51) Int. Cl.: H02M 7/483, H02M 7/487

(54) **BATTERY ENERGY STORAGE SYSTEM AND METHOD FOR OPERATING A BATTERY ENERGY STORAGE SYSTEM**

(71) Applicant: Hitachi Energy Ltd, 8050 Zürich (CH)
(72) Inventor: ILVES, Kalle, 11420 Stockholm (SE); OKAZAKI, Yuhei, 72224 Västerås (SE)
(74) Representative: Michalski Hüttermann & Partner Patentanwälte mbB

(57) **Abstract**

The invention relates to a battery energy storage system comprising a battery (5), at least one set of two capacitors (3) connected in series thereby each forming a respective direct current midpoint, DCm, between the two capacitors (3) and each set connected in parallel to the battery (5), at least one three-level converter (1) each having a positive and a negative direct current input, DCp, DCn, each three-level converter (1) connected in parallel to the battery (5) and each three-level converter (1) comprising a three phase alternating current, AC, output, ACr, s, t, configured for connecting an AC power grid (7), and a controller (4) configured to measure a first differential voltage, vDCp, between DCp and DCm and a second differential voltage vDCn, between DCm and DCn, and calculate a voltage difference between vDCp and vDCn.

## Description

### Technical Field

The invention relates to a battery energy storage system comprising a battery, at least one set of two capacitors connected in series thereby each forming a respective direct current midpoint between the two capacitors and each set connected in parallel to the battery, and at least one three-level converter each having a positive and a negative direct current input each three-level converter connected in parallel to the battery and each three-level converter comprising a three phase alternating current output configured for connecting an alternating current power grid. The invention further relates to a method for operating a battery energy storage system comprising a battery, at least one set of two capacitors connected in series thereby each forming a respective direct current midpoint between the two capacitors and each set connected in parallel to the battery, and at least one three-level converter each having a positive and a negative direct current input each three-level converter connected in parallel to the battery and each three-level converter comprising a three phase alternating current output configured for connecting an alternating current power grid.

### Background Art

In three-level converters a midpoint between two dc-link capacitors may become unbalanced for various reasons. One example includes a connection of an additional converter unit to a dc-bus which is shared by a group of parallel-connected converters. In such case there can be some asymmetry in a charging circuit for the connected converter resulting in a voltage difference between an upper and a lower capacitor of the connected converter unit. DC-link voltage imbalance may also occur due to even-order harmonics in a converter voltage or current waveforms.

Most balancing solutions include common mode voltages, and most typical solutions use redundant states with space vector modulation. However, much less attention has been given to carrier-based pulse width modulation methods, in particular for cases with multiple converter units connected in parallel to the same dc-bus without connecting the midpoints. Another issue with prior art solutions is that methods based on redundant switching states require some amount of current to achieve a balancing effect. At no-load conditions, the balancing current will be very small.

### Summary of invention

It is therefore an object of the invention to provide an improved battery energy storage system and a respective method for operating a battery energy storage system.

The object of the invention is solved by the features of the independent claims. Preferred implementations are detailed in the dependent claims.

Thus, the object is solved by a battery energy storage system comprising
a battery,
at least one set of two capacitors connected in series thereby each forming a respective direct current midpoint, DCm, between the two capacitors and each set connected in parallel to the battery,
at least one three-level converter each having a positive and a negative direct current input, DCp, DCn, each three-level converter connected in parallel to the battery and each three-level converter comprising a three phase alternating current, AC, output configured for connecting an AC power grid, and
a controller configured to
   measure a first differential voltage, vDCp, between DCp and DCm and a second differential voltage vDCn, between DCm and DCn, and calculate a voltage difference between vDCp and vDCn,
   multiply the voltage difference with each a sinus and a cosinus function of a frequency angle of an AC grid voltage of the AC power grid for obtaining a stationary frame alpha and beta current reference, iAlpha_ref, iBeta_ref, and
   control the at least one three-level converter with a pulse width modulation, PWM, switching pattern based on a negative sequence of the stationary frame alpha and beta current reference for the three phase AC output.

A key point of the invention is that the controller can in particular introduce an even-order harmonics in an output current i.e. a direct component can be introduced to the current flowing out from the direct current midpoint between the two capacitors. Said direct component can affect a direct voltage offset between the two capacitors. That is, with a positive direct current flowing out from the direct current midpoint a lower capacitor connected to the negative direct current input, DCn, such as a negative dc-rail, can be discharged, while an upper capacitor connected to the positive direct current input, DCp, such as a positive rail, can be charged. Similarly, a negative direct current flowing through a middle switch of the respective converter would have an opposite effect, charging the lower capacitor and discharging the upper capacitor.

In other words, the controller measures DCp to DCm voltage and DCn to DCm voltage, namely vDCp and vDCn, and then calculates the difference between vDCp and vDCn. Said difference can be multiplied with a proportional gain. After an optional limitation of an amplitude of an output of the proportional gain, sinus and cosine terms are multiplied to an output with preferably twice the fundamental frequency angle, preferably 2theta. The sinus and cosine multiplication outputs become stationary frame alpha and beta current references, namely iAlpha_ref and iBeta_ref. The rest of the controller can track a reference current to produce necessary converter actions for balancing capacitor voltages. Thereby, current reference is preferably an alternating current reference where the control action creates the alternating current in R, S, T phases.

The AC power grid may for example be rated at 380 VAC to 415 VAC, for example, ranging from 30 to 68.5 kVA, or other values. The three-level converter may comprise three three-level converter legs each comprising a rated power of, for example, 30 kW at 400V. The battery can be provided, for example, as lithium-ion battery having 100 kWh. The controller can be provided as computerized means, for example comprising a microprocessor. The converter is preferably provided as an inverter. When the negative sequence current of the stationary frame alpha and beta current reference is controlled to be AC currents, then, for example, switching actions of the three level converter converts the AC currents to the DC currents to the capacitors on the DC side of the three level converter, which depending on the phase of the negative sequence current, one of the two capacitors charges respectively discharges and discharges respectively charges.

According to a preferred implementation the controller is configured, prior to multiply the sinus and the cosinus functions, to
multiply the difference with a proportional gain, and
limit an amplitude of the multiplied difference.

Thereby, gain and/or amplitude can for example be limited respectively specified by an allowable grid negative sequence current, as for example specified in a regulation such as IEEE 519-2022. For example, the gain can be 0.1, 0.2 or 0.5. The amplitude can for example be limited to 50, 100 or 200 mA.

In a further preferred implementation, the battery energy storage system comprises a filter, in particular a LCL filter, connected with one end to the alternating current output, ACr, s, t and configured for connecting with another end the AC power grid. Such filter allows mitigating switching harmonics produced by the PWM switching operation. The LCL filter can be any typical LCL filter topology as known from prior art, typically comprising a converter-side inductor, a grid-side inductor and filter capacitor.

According to another preferred implementation the controller is provided as a proportional integral, PI, controller. A PI controller is a type of controller formed by combining proportional and integral control action. Besides that other types of controllers are possible, such as for example a proportional integral derivative controller, PID, controller.

In a further preferred implementation, the controller is configured to multiply the voltage difference with each the sinus and the cosinus function of twice the frequency angle of the AC grid voltage of the AC power grid for obtaining the stationary frame alpha and beta current reference, iAlpha_ref, iBeta_ref. Besides that three times or four time the frequency angle can be used.

According to another preferred implementation the three-level converter is provided as T-type three-level converter or as neutral point clamp, NPC, converter. The T-type converter is comparable to the NPC converter in that it usually adds an additional output voltage level at 0V, thereby offering improved harmonic performance over a standard two-level converter. Compared to an NPC converter, the T-type converter has a reduced part count due to an elimination of clamping diodes, and reduced conduction losses of outer switching devices, since usually only one switching device is used rather than two switching devices in connected series. Besides that other converter types are possible

In a further preferred implementation, the battery energy storage system comprises a plurality of three-level converters and a plurality of sets of two capacitors, each set associated to one of the plurality of three-level converters, whereby the positive and the negative direct current inputs, DCp, DCn, and the alternating current, AC, output, ACr, s, t, of the plurality of three-level converters are connected in parallel and the controller is configured to control the plurality of three-level converters with a respective pulse width modulation, PWM, switching pattern. Preferably, the controller individual controls each of the three-level converters.

The object is further solved by a method for operating a battery energy storage system comprising
a battery,
at least one set of two capacitors connected in series thereby each forming a respective direct current midpoint, DCm, between the two capacitors and each set connected in parallel to the battery,
at least one three-level converter each having a positive and a negative direct current input, DCp, DCn, each three-level converter connected in parallel to the battery and each three-level converter comprising a three phase alternating current, AC, output, connecting an AC power grid, and comprising the steps of
measuring a first differential voltage, vDCp, between DCp and DCm and a second differential voltage vDCn, between DCm and DCn, and calculating a voltage difference between vDCp and vDCn,
multiplying the voltage difference with each a sinus and a cosinus function of a frequency angle of an AC grid voltage of the AC power grid for obtaining a stationary frame alpha and beta current reference, and
controlling the at least one three-level converter with a pulse width modulation, PWM, switching pattern based on a negative sequence of the stationary frame alpha and beta current reference for the three phase alternating current, AC, output.

In a preferred implementation the method comprises the steps, prior to multiplying the sinus and the cosinus functions, of
multiplying the difference with a proportional gain, and
limiting an amplitude of the multiplied difference.

In a further preferred implementation the method comprises a filter, in particular a LCL filter, connected with one end to the alternating current output and connected with another with the AC power grid.

In another preferred implementation the method comprises a proportional integral, PI, controller for controlling the at least one three-level converter.

In a further preferred implementation the method comprises the step of:
multiplying the voltage difference with each the sinus and the cosinus function of twice the frequency angle of the AC grid voltage of the AC power grid for obtaining the stationary frame alpha and beta current reference.

In another preferred implementation the three-level converter is provided as T-type three-level converter or as neutral point clamp, NPC, converter.

In a further preferred implementation the method comprises a plurality of three-level converters and a plurality of sets of two capacitors, each set associated to one of the plurality of three-level converters, whereby the positive and the negative direct current inputs, and the alternating current, AC, output of the plurality of three-level converters are connected in parallel and comprising the step of
controlling the plurality of three-level converters with a respective pulse width modulation, PWM, switching pattern.

Further implementations and advantages of the method are directly and unambiguously derived by the person skilled in the art from the system as described before.

### Brief description of drawings

These and other aspects of the invention will be apparent from and elucidated with reference to the implementations described hereinafter.

In the drawings:
Fig. 1 shows a three-level converter according to a preferred implementation in a schematic view,
Figs. 2a and 2b show two possible implementations of three-level converter legs of the three-level converter of Fig. 1 according to the preferred implementation in a schematic view,
Fig. 3 shows the three-level converter legs of Fig. 2a switched between a positive and a negative direct current input according to the preferred implementation in a schematic view,
Fig. 4 shows a battery energy storage system comprising two three-level converters of Fig. 1 according to the preferred implementation in a schematic view, and
Fig. 5 shows a flow chart for controlling the three-level converter of Fig. 1 according to the preferred implementation in a schematic view.

### Description of implementations

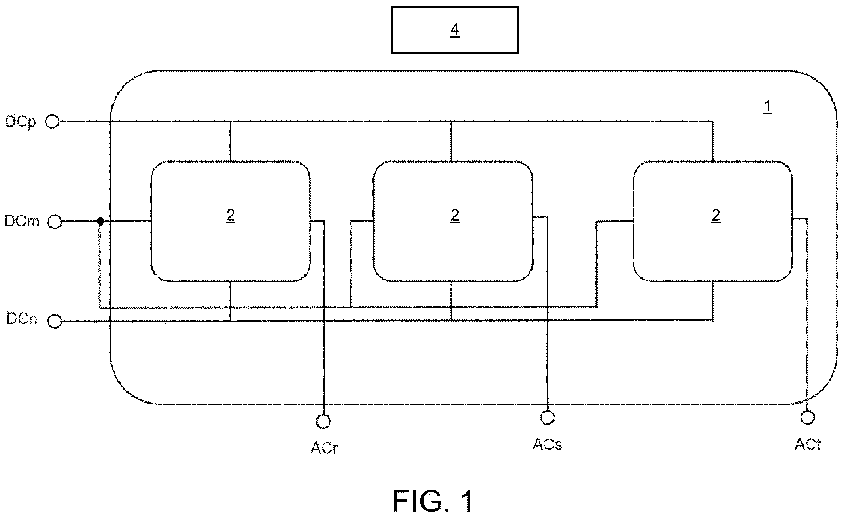

Fig. 1 shows a three-level converter 1 according to a preferred implementation in a schematic view. The three-level converter 1 comprises three three-level converter legs 2, each associated to one phase of the three-level converter 1. Such wise the three-level converter 1 comprises three phase alternating current, AC, outputs, ACr, s, t, which are each fed by one of the three-level converter legs 2. The three-level converter legs 2 each comprise respectively the three-level converter 1 comprises a positive and a negative direct current input, DCp, DCn, which positive and negative direct current inputs, DCp, DCn, feed all three-level converter legs 2.

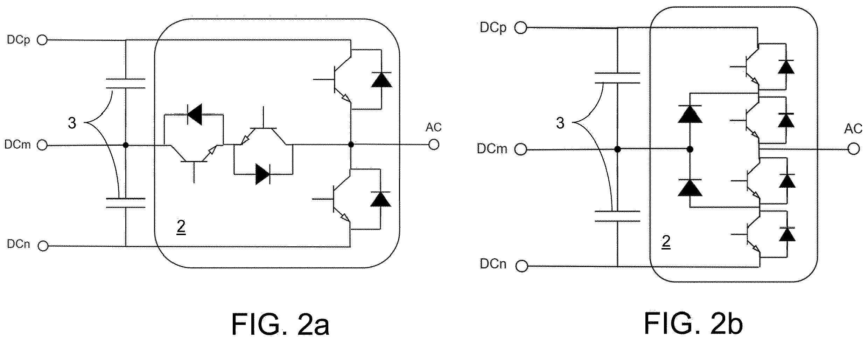

Figs. 2a and 2b show two possible implementations of three-level converter legs 2 in a schematic view. Fig. 2a shows a T-type converter leg comprising four switches each having a diode connected anti-parallel, whereby two switches are connected in series between the positive and the negative direct current inputs, DCp, DCn, which a midpoint connected to the respective AC output, ACr, s, t, to be applied with a sinusoidal voltage waveform. Said midpoint is further connected via two other switches connected in series to a direct current midpoint, DCm, formed by a set of two capacitors 3 connected in series between the positive and the negative direct current inputs, DCp, DCn (Fig. 1 does not show the set of two capacitors 3).

Fig. 2b show an alternative implementation of the three-level converter leg 2 provided as neutral point clamp, NPC. Thereby four switches each having a diode connected anti-parallel are connected between the positive and the negative direct current inputs, DCp, DCn, whereby the inner midpoint is connected to the respective AC output, ACr, s, t. The two inner switches are connected in parallel to two additional antiparallel diodes connected in parallel, which midpoint forms the direct current midpoint, DCm. As with Fig. 2a, the set of two capacitors 3 are connected in series between the positive and the negative direct current inputs, DCp, DCn thereby forming the direct current midpoint, DCm. Turning back to Fig. 1, all three direct current midpoints, DCm, are connected together.

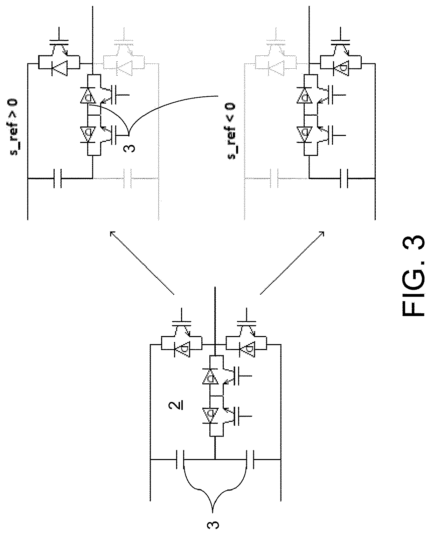

Now in respect to the proposed solution, first a switching pattern of a 3-level topology as shown in Fig. 1 normally using a level shifted carrier pulse width modulation, PWM, for example using phased disposition or phase opposition disposition, can be considered. If a reference waveform of the PWM is positive, the respective AC output, ACr, s, t, also referred to as AC terminal, will be switched between the direct current midpoint, DCm, of the capacitors 3 and the positive direct current input, DCp, also referred to as positive DC-rail. Similarly, if the reference waveform is negative, the respective AC output, ACr, s, t will be switched between the direct current midpoint, DCm, and the negative direct current input, DCn, also referred as negative DC-rail, as indicated in Fig. 3.

An actual current flowing through the direct current midpoint, DCm, is then modulated as 1-s, where s is a modulation reference, when the modulation reference is positive, and 1+s when the modulation reference is negative. In other words, the current flowing through the direct current midpoint, DCm, of the capacitors 3 can be expressed as the output current modulated by 1-lsl. Since the function s typically has half-wave symmetry, an absolute value |s| will be periodic with twice a fundamental frequency period. Therefore, there will be even-order harmonics in the signal 1 -|s|.

Since the current flowing out from the direct current midpoint, DCm, is the output current modulated by 1-|s|, the even-order harmonics in 1-|s| will lead to a direct component in the current flowing out from the direct current midpoint, DCm, if there are even-order harmonics of the same frequencies in the output current, while assuming that these harmonics are not phase shifted 90 with respect to the harmonic components in 1-lsl. Therefore, by purposefully introducing even-order harmonics in an output current, a direct component can be introduced to the current flowing out from the direct current midpoint, DCm, between the two capacitors 3.

Said direct component will affect a direct voltage offset between the upper and lower dc-link capacitors 3. That is, with a positive direct current flowing out from the direct current midpoint, DCm, will discharge the lower capacitor 3 connected to the negative dc-rail i.e. to the negative direct current input, DCn, and charge the upper capacitor 3 connected to the positive rail i.e. to the positive direct current input, DCp. Similarly, a negative direct current flowing through the middle switch would have an opposite effect, charging the lower capacitor 3 and discharging the upper capacitor 3.

Dominant harmonic in the signal 1-|s| will be the second-order harmonic. If the signal s has half-wave symmetry, a phase angle of the second-order harmonic in 1-|s| will be such that the peaks of the second order harmonic are aligned with zero crossings of the signal s. To clarify, if s=M1 *cos(wt), then the second order harmonic in 1-|s| will be M2*cos(2wt). Accordingly, to maximize an effect of any second-order harmonic current which is injected to a point of common coupling, PCC, the phase angle of the second-order harmonic should be such that the peak or bottom, depending on whether a positive or negative current should be achieved in at the direct current midpoint, DCm, of the capacitors 3, of the second-order harmonic align with the zero crossing of the fundamental frequency voltage waveform.

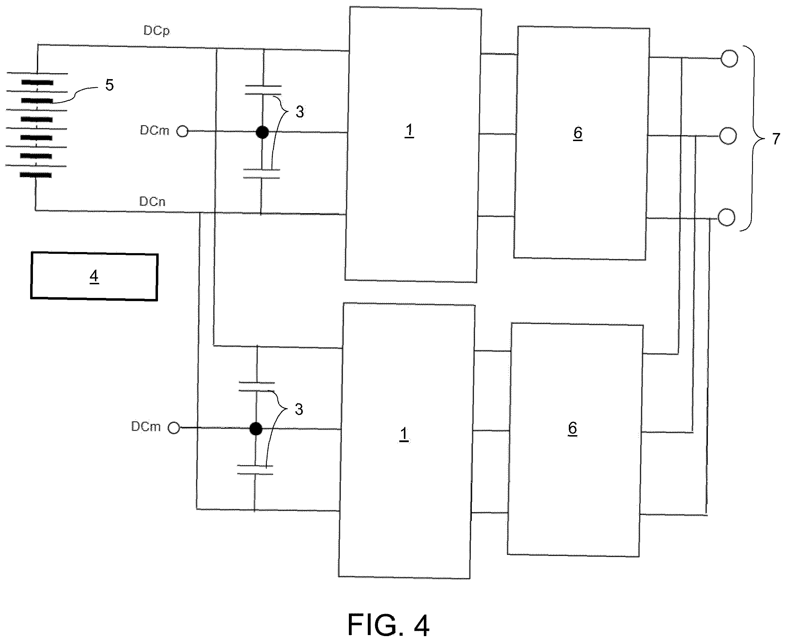

A controller 4, shown in Fig. 4, regulating an amount of second-order harmonic current, can for example be a proportional integral, PI, controller 4 which takes dc-link capacitor voltages as input, or more specifically, a difference in the direct voltage of the upper and lower capacitor voltage. Thereby, the second-order harmonic which is to be injected can only be temporary, and only need to be of very small amplitude to solve imbalances that may occur when, for example, connecting a new converter unit to the shared dc-link made up by the positive and a negative direct current inputs, DCp, DCn. Therefore, an amplitude of the second-order harmonic should be limited by a saturation of a controller output. The total saturation should be such that the harmonic requirements according to any standard or system specifications which are to be satisfied are not violated.

Fig. 4 shows an battery energy storage system comprising a battery 5 and two three-level converters 1 each having a set of two capacitors 3 connected in series. The positive and negative direct current inputs, DCp, DCn, of the two three-level converters 1 are connected in parallel to the battery 5 and in parallel to the two sets of two capacitors 3 connected in series. The two direct current midpoints, DCm, of the two sets of two capacitors 3 are connected to the controller 4, not shown. The two three phase AC, outputs, ACr, s, t, are each connected to a respective LCL filter 6, which LCL filters 6 are connected in parallel to an AC grid 7, only indicated.

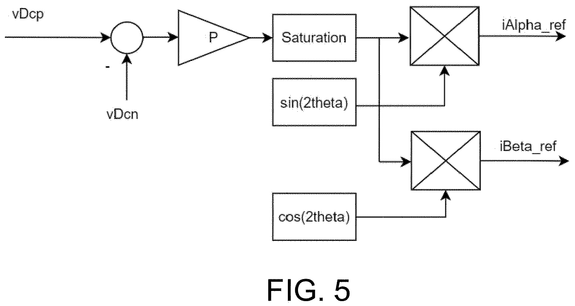

The controller 4, as partially described before, first measures a first differential voltage, vDCp, between DCp and DCm and measures a second differential voltage vDCn, between DCm and DCn, as shown in the flow chart in Fig. 5. Second, the controller 4 calculates a voltage difference between vDCp and vDCn. Third, the calculated voltage difference is multiplied with a proportional gain. Fourth, an amplitude of the multiplied difference is limited. Fifth, the voltage difference is multiplied with each a sinus and a cosinus function of twice a frequency angle, namely 2theta, of an AC grid voltage of the AC power grid 7 for obtaining a stationary frame alpha and beta current reference, iAlpha_ref, iBeta_ref.

Sixth, the three-level converter 1 is controlled with a pulse width modulation, PWM, switching pattern based on a negative sequence of the stationary frame alpha and beta current reference, iAlpha_ref, iBeta_ref, for the three phase alternating current, AC, output, ACr, s, t. In respect to the implementation shown in Fig. 4, the controller 4 controls the two three-level converters 1 with a respective pulse width modulation, PWM, switching pattern. The controller 4 thus tracks the reference current to produce necessary converter actions to balance the capacitor voltages. The current reference is an alternating current reference where the control action creates the alternating current in R, S, T phases.

In an alternative implementation, in case the direct current midpoints, DCm, is not connected between the parallel three-level converters 1, an imbalance between the upper and lower capacitor 3 may be different in each three-level converter 1. Such voltage imbalance can be equalized be-tween the three-level converters 1 by circulating a second-order harmonic between the three-level converters 1. In this way it is possible to avoid injecting even-order harmonics to the AC power grid 7 or load. Such capacitor voltage imbalances can be equalized by the controller 4 which collects all capacitor voltage measurements. From the measured imbalances, the current injection is calculated such that:
1. The sum of all injected second-order harmonics is zero.
2. The second-order harmonic injected by each three-level converter 1 is weighted by its capacitor voltage imbalance.

The calculation of the second-order harmonic reference is made by first identifying the final balanced voltage values. This can be done by identifying the voltage difference dV between the upper and lower capacitor voltage in each three-level converter 1, as described before. The reference value of dV will then be set as the mean-value of all individual dV values for the different converters. For clarification, see a few examples below.
a. Two converters dV = [-10, +10]: Reference dV = 0 V.
   (Increase first by +10 V, reduce second by -10 V.)
b. Two converters dV = [2, +10]: Reference dV = 6 V.
   (Increase first by +4 V, reduce second by -4 V.)
c. Three converters dV = [-8, 2, 3]: Reference dV = -1 V.
   (Increase first by +7, reduce second by -3, and third by -4.)

The aforementioned calculation principle is based on the fact that with equal modulation methods in all three-level converters 1, injecting a second-order harmonic in one three-level converter 1 and returning in the second-order harmonic in another three-level converter 1 will in-crease the dV in one three-level converter 1 and reduce the dV in the other three-level converter 1. Note that dV can be both positive and negative, so a reduction of dV does not necessarily improve the balance be-tween the capacitors 3.

The second-order current harmonic reference for each three-level converter 1 is then set to be proportional to the difference between its measured dV and the reference value for dV. With the calculation procedure as described here, the sum of all second-order harmonics will then be zero. Consequently, the second-order harmonic is only circulating between the three-level converters 1 and is not injected to the AC power grid 7 or load.

The proportionality constant can be controlled in a feedback-loop, for example using the PI controller 4. In addition to the differential balancing, which can act very fast even under no-load conditions, a slower balancing controller 4 can be active for the whole group of three-level converters 1. This slower balancing method can, for example, use a dc-offset in the modulation references to balance the capacitors 3. Such dc-offset which would have to be adjusted according to the direction of the active power flow could also be used to balance the whole group of dc-link capacitors 3 in 3-wire systems where the midpoints DCm are connected between the three-level converters 1.

In a further alternative implementation, when a second-order harmonic is circulated between two three-level converters 1, it will have an opposite impact in the capacitor voltage balance of the two three-level converters 1. The reason for this is the utilization of the zero switching state where the AC-terminal is connected to the midpoint DCm of the capacitors 3. This impact can be mitigated by introducing an overlap between the upper and lower carriers, e.g., upper carrier spans from -0.1 to +1, and lower carrier from -1 to +0.1, or even completely removed if the three-level converter 1 is modulated as a two-level three-level converter 1, completely avoiding the zero voltage switching state. As an additional alternative, it is also possible use one or more three-level converters 1 which are actual two-level three-level converters 1 instead of three-level three-level converters 1 which are (temporarily) operated as two-level three-level converters 1.

With parallel-connected three-level converters 1, one three-level converter 1 can be set to operate in two-level operation. The reduction in harmonic performance can be compensated for by interleaving of the parallel-connected three-level converters 1. With this arrangement, the different converter units can be set to inject any second-order harmonic current which is required to balance the dc-link capacitors 3. This second-order harmonic is then circulated back via the dedicated three-level converter 1 in two-level operation.

In this way, the dc-link capacitor voltages can be fully balanced without injecting any even-order harmonics to the AC power grid or load. This would also work under no-load conditions, when the midpoints DCm are connected, as well as when the midpoints DCm are not connected. Note that the two-level converters 1 could also inject even-order harmonics to the AC power grid 7 without causing a dc-link voltage imbalance if this is required as part of an active filtering functionality or other similar application.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: three-level converter
- 2: three-level converter leg
- 3: capacitor
- 4: controller
- 5: battery
- 6: LCL filter
- 7: AC power grid

- ACr, s, t: AC output
- DCp: positive direct current input
- DCn: negative direct current input
- vDCp: first differential voltage
- vDCn: second differential voltage
- DCm: direct current midpoint
- iAlpha_ref: stationary frame alpha current reference
- iBeta_ref: stationary frame beta current reference

## Claims

1. Battery energy storage system comprising
a battery (5),
at least one set of two capacitors (3) connected in series thereby each forming a respective direct current midpoint, DCm, between the two capacitors (3) and each set connected in parallel to the battery (5),
at least one three-level converter (1) each having a positive and a negative direct current input, DCp, DCn, each three-level converter (1) connected in parallel to the battery (5) and each three-level converter (1) comprising a three phase alternating current, AC, output, ACr, s, t, configured for connecting an AC power grid (7), and
a controller (4) configured to
measure a first differential voltage, vDCp, between DCp and DCm and a second differential voltage vDCn, between DCm and DCn, and calculate a voltage difference between vDCp and vDCn,
multiply the voltage difference with each a sinus and a cosinus function of a frequency angle of an AC grid voltage of the AC power grid (7) for obtaining a stationary frame alpha and beta current reference, iAlpha_ref, iBeta_ref, and
control the at least one three-level converter (1) with a pulse width modulation, PWM, switching pattern based on a negative sequence of the stationary frame alpha and beta current reference for the three phase alternating current, AC, output, ACr, s, t.

2. Battery energy storage system according to the previous claim, whereby the controller (4) is configured, prior to multiply the sinus and the cosinus functions, to
multiply the difference with a proportional gain, and
limit an amplitude of the multiplied difference.

3. Battery energy storage system according to any of the previous claims, comprising a filter, in particular a LCL filter (6), connected with one end to the alternating current output, ACr, s, t and configured for connecting with another end the AC power grid (7).

4. Battery energy storage system according to any of the previous claims, whereby the controller (4) is provided as a proportional integral, PI, controller (4).

5. Battery energy storage system according to any of the previous claims, whereby the controller (4) is configured to multiply the voltage difference with each the sinus and the cosinus function of twice the frequency angle of the AC grid voltage of the AC power grid (7) for obtaining the stationary frame alpha and beta current reference, iAlpha_ref, iBeta_ref.

6. Battery energy storage system according to any of the previous claims, whereby the three-level converter (1) is provided as T-type three-level converter (1) or as neutral point clamp, NPC, converter.

7. Battery energy storage system according to any of the previous claims, comprising a plurality of three-level converters (1) and a plurality of sets of two capacitors (3), each set associated to one of the plurality of three-level converters (1), whereby the positive and the negative direct current inputs, DCp, DCn, and the alternating current, AC, output, ACr, s, t, of the plurality of three-level converters (1) are connected in parallel and the controller (4) is configured to control the plurality of three-level converters (1) with a respective pulse width modulation, PWM, switching pattern.

8. Method for operating a battery energy storage system comprising
a battery (5),
at least one set of two capacitors (3) connected in series thereby each forming a respective direct current midpoint, DCm, between the two capacitors (3) and each set connected in parallel to the battery (5),
at least one three-level converter (1) each having a positive and a negative direct current input, DCp, DCn, each three-level converter (1) connected in parallel to the battery (5) and each three-level converter (1) comprising a three phase alternating current, AC, output, ACr, s, t, connecting an AC power grid (7), and comprising the steps of
measuring a first differential voltage, vDCp, between DCp and DCm and a second differential voltage vDCn, between DCm and DCn, and calculating a voltage difference between vDCp and vDCn,
multiplying the voltage difference with each a sinus and a cosinus function of a frequency angle of an AC grid voltage of the AC power grid (7) for obtaining a stationary frame alpha and beta current reference, iAlpha_ref, iBeta_ref, and
controlling the at least one three-level converter (1) with a pulse width modulation, PWM, switching pattern based on a negative sequence of the stationary frame alpha and beta current reference for the three phase alternating current, AC, output, ACr, s, t.

9. Method according to the previous claim, whereby comprising the steps, prior to multiplying the sinus and the cosinus functions, of
multiplying the difference with a proportional gain, and
limiting an amplitude of the multiplied difference.

10. Method according to any of the previous two claims, comprising a filter, in particular a LCL filter (6), connected with one end to the alternating current output, ACr, s, t and connected with another with the AC power grid (7).

11. Method according to any of the previous three claims, comprising a proportional integral, PI, controller (4) for controlling the at least one three-level converter (1).

12. Method according to any of the previous four claims, comprising the step of:
multiplying the voltage difference with each the sinus and the cosinus function of twice the frequency angle of the AC grid voltage of the AC power grid (7) for obtaining the stationary frame alpha and beta current reference, iAlpha_ref, iBeta_ref.

13. Method according to any of the previous five claims, whereby the three-level converter (1) is provided as T-type three-level converter (1) or as neutral point clamp, NPC, converter.

14. Method according to any of the previous six claims, comprising a plurality of three-level converters (1) and a plurality of sets of two capacitors (3), each set associated to one of the plurality of three-level converter (1)s, whereby the positive and the negative direct current inputs, DCp, DCn, and the alternating current, AC, output, ACr, s, t, of the plurality of three-level converter (1)s are connected in parallel and comprising the step of
controlling the plurality of three-level converter (1)s with a respective pulse width modulation, PWM, switching pattern.
